# EUROPÄISCHE PATENTSCHRIFT

(11) **EP 2 271 534 B1**
(45) Veröffentlichungstag und Bekanntmachung des Hinweises auf die Patenterteilung: **25.02.2015**
(21) Anmeldenummer: 08874100.4
(22) Anmeldetag: 17.12.2008
(51) Int. Cl.: B60W 30/18, B60T 7/22, B60T 1/10, B60W 10/18, B60W 10/08

(54) **VERFAHREN ZUR STEUERUNG EINES DUALEN PUMPSYSTEMS IN HYBRIDANTRIEBEN**
METHOD FOR CONTROLLING A DUAL PUMP SYSTEM IN HYBRID DRIVES
PROCÉDÉ DE COMMANDE D'UN SYSTÈME DE POMPAGE DOUBLE ACTION DANS DES PROPULSIONS HYBRIDES

(30) Priorität: 29.04.2008 DE 102008001455
(43) Veröffentlichungstag der Anmeldung: 12.01.2011
(73) Patentinhaber: Robert Bosch GmbH, 70442 Stuttgart (DE)
(72) Erfinder: HELLMANN, Manfred, 71706 Hardthof (DE)
(86) Internationale Anmeldenummer: PCT/EP2008/067693
(87) Internationale Veröffentlichungsnummer: WO 2009/132720

(56) Entgegenhaltungen:
- EP-A- 1 555 184
- US-A1- 2006 125 317
- US-A1- 2006 220 453
- US-A1- 2007 241 611

## Beschreibung

### Stand der Technik

Die Erfindung betrifft ein Verfahren zum Abbremsen eines Fahrzeugs unter Verwendung der Kombination einer elektrischen Maschine und eines Pumpsystems. Um eine abbremsende Wirkung zu erreichen, wird die elektrische Maschine als Generator betrieben, um durch Rekuperation kinetische Energie in elektrische Energie umzuwandeln. Das Pumpsystem umfasst eine Pumpe, die einen Bremsdruck für eine Reibungsbremse erzeugt.

Pumpsysteme werden in Fahrzeugen als Bremseinheit verwendet, die von einer automatischen Fahrsteuerung angesteuert wird. Insbesondere Fahrzeuge mit adaptiver Fahrsteuerung, ACC, sehen die Möglichkeit vor, die Geschwindigkeit zu reduzieren oder bei einer Bergabfahrt die Geschwindigkeit zu halten, wobei ein derartiger aktiver Bremseingriff von einer Steuerung automatisch ausgeübt wird. Ein weiters Beispiel sind Fahrgeschwindigkeitsregler (Tempomat oder ähnliches), die neben einer automatischen Antriebssteuerung auch eine automatische Bremssteuerung umfassen. Das automatische Abbremsen wird insbesondere durch ESP-Systeme (elektronisches Stabilitätsprogramm) durchgerührt, die neben der Aufgabe des Stabilisierens auch die Fahrsteuerung realisieren, wie sie von ACC-Systemen oder Fahrgeschwindigkeitsreglern vorgegeben wird.

Die Druckschrift DE 10 2006 017 176 A1 zeigt eine Geschwindigkeitsregelvorrichtung zur kraftstoffsparenden Fahrweise mit Regelstrategien, die Grenzen für die Beschleunigung vorsehen. Hierbei wird ein Elektromotor zur Rückgewinnung von Bewegungsenergie verwendet, wobei jedoch die sich dadurch ergebende Bremswirkung im Weiteren nicht berücksichtigt wird.

Üblicherweise werden zum Druckaufbau bei ESP-Systemen Kolbenpumpen verwendet. Auf Grund der Bauweise sind derartige Kolbenpumpen nicht zur Feinregulierung des Bremsdrucks vorgesehen, insbesondere wenn die Kolbenpumpe einen Bremsdruck bzw. einen Bremsmoment in einzelnen, diskreten Werten vorsieht und keine kontinuierliche Stellung des Bremsmoments ermöglicht. Neben der mangelnden Möglichkeit der Feinregulierung des Bremsdrucks besteht ein weiterer Nachteil darin, dass bei häufigem Ansprechen der Pumpe, wie es bei der Ansteuerung durch ein ACC-System auftritt, die Lebensdauer der Pumpe reduziert wird. Insbesondere bei häufigen, geringfügigen Bremsmomenten, wie es eine ACC-Steuerung oder ein Tempomat vorsieht, wird die Pumpe stark abgenutzt, ineffektiv betrieben, und erzeugt auf Grund des stufigen Steuerverhaltens ein unangenehmes Fahrverhalten des Fahrzeugs.

Ein Verfahren zur kombinierten Ansteuerung einer elektrischen Maschine und eines Pumpsystems nach dem Oberbegriff des unabhängigen Anspruchs 1 ist aus der US 2007 241 611 A1 bekannt.

Es ist daher eine Aufgabe der Erfindung, ein Verfahren zum Abbremsen eines Fahrzeugs vorzusehen, bei dem die oben genannten Nachteile nicht auftreten und insbesondere die Lebenszeit der in dem Bremssystem eingesetzten Pumpe erhöht wird.

### Offenbarung der Erfindung

Die Erfindung ermöglicht eine deutliche Erhöhung der Lebensdauer einer Pumpe innerhalb eines Bremssystems und ermöglicht gleichzeitig ein angenehmeres Fahrverhalten, ohne die Komplexität des Bremssystems zu erhöhen und ohne auf zusätzliche Komponenten zurückgreifen zu müssen.

Das der Erfindung zu Grunde liegende Konzept liegt darin, das von einer automatischen Fahrsteuerung vorgesehene Bremsmoment (im Weiteren Summenbremsmoment) auf das im Fahrzeug vorgesehene Pumpsystem, das einen Bremsdruck erzeugt, sowie auf eine elektrische Maschine aufzuteilen, die als Generator arbeitet. Die als Generator arbeitende elektrische Maschine erzeugt ein Rekuperationsbremsmoment und wandelt kinetische Energie in elektrische Energie um, wobei sich die Maschine schnell, kontinuierlich und sehr feinstufig regeln lässt. Damit lässt sich zum einen das häufige An- und Ausschalten der Pumpe vermeiden, indem unter Zuhilfenahme der elektrischen Maschine das Summenbremsmoment erhöht wird, ohne Bremsmoment des Pumpsystems (im Weiteren Pumpsystembremsmoment) zu erhöhen. Beispielsweise bei geringen Summenbremsmomenten kann auf das Pumpsystembremsmoment vollständig verzichtet werden, wobei die elektrische Maschine derart angesteuert wird, dass diese das gesamte Summenbremsmoment erzeugt.

Erfindungsgemäß wird somit ein Verfahren zum Vorsehen eines Summenbremsmoments ermöglicht, das sich für Hybrid-Fahrzeuge mit ESP-System (System mit elektronischem Stabilitätsprogramm) eignet. Die elektrische Maschine des Traktionsmoduls des Hybridantriebs wird somit zur Rekuperation verwendet, um zum einen elektrische Energie zu erzeugen und zum anderen das Bremsmoment derart gezielt anzusteuern, dass eine häufige Ansteuerung des Pumpsystems nicht notwendig ist, wobei die Bremse, die von dem Pumpsystem angesteuert wird, von der elektrischen Maschine unterstützt wird.

Erfindungsgemäß wird somit das von einem Regelsystem (beispielsweise ein ACC-System, d.h. ein System zur automatischen Fahrsteuerung, oder ein Tempomat bzw. ein Fahrgeschwindigkeitsregler) vorgesehene Summenbremsmoment (Sollwert) aufgeteilt in ein Pumpsystembremsmoment, das auf den Abtrieb des Fahrzeugs wirkt, und ein Rekuperationsbremsmoment, das auch auf den Abtrieb wirkt. Das Pumpsystembremsmoment und das Rekuperationsbremsmoment werden somit im wesentlichen gleichzeitig erzeugt und wirken gemeinsam auf den Abtrieb. Durch die so vorgesehene Summenbildung kann ein gewünschtes Summenbremsmoment vorgesehen werden, wobei gleichzeitig eine nahezu beliebige Aufteilung zwischen Pumpsystembremsmoment und Rekuperationsbremsmoment vorgesehen wird. Insbesondere erlaubt diese Aufteilung, dass das Pumpsystembremsmoment derart vorgesehen wird, dass die Pumpe so selten wie möglich in Aktion tritt bzw. so selten wir möglich ihre Betriebsparameter ändert, und gleichzeitig die elektrische Maschine die verbleibende Differenz zum Summenbremsmoment flexibel erzeugt und sowohl im Betriebsmodus des Pumpsystems als auch dem gewünschten Summenbremsmoment Rechnung trägt. Im Gegensatz zum Pumpsystem ist eine schnelle Änderung des Bremsmoments, auch über relativ breite Steuerspannen hinweg, durch die elektronische Ansteuerung der elektrischen Maschine realisierbar, ohne dass dies Nachteile für den Betrieb der elektrischen Maschine hätte. Gleichzeitig ist es nicht notwendig, dass die elektrische Maschine für sehr große Bremsmomente ausgelegt wird, da bei großen zu erzeugenden Summenbremsmomenten das Pumpsystembremsmoment die Hauptlast bzw. eine Grundlast tragen kann, wobei die Hauptlast bzw. die Grundlast keinen schnellen Änderungen unterworfen ist, da die Flexibilität von der elektrischen Maschine vorgesehen wird, die schnelle Änderungen mit hoher Präzision vorsieht und jeden beliebigen Bremsmomentwert erzeugen kann.

Gemäß einer bevorzugten Ausführungsform des erfindungsgemäßen Verfahrens wird die Pumpe gemäß einem Ist-Pumpsystembremsmoment betrieben, so dass ein beispielsweise temporär konstantes Grund-Bremsmoment vorgesehen wird, wobei das sich hinzu addierende Rekuperationsbremsmoment dem tatsächlichen erwünschten Summenbremsmoment Rechnung trägt, indem die Differenz zwischen dem Summenbremsmoment und dem Ist-Pumpsystembremsmoment ermittelt wird. Gemäß dieser Differenz wird dann die elektrische Maschine als Rekuperationsgenerator betrieben, so dass in diesem Fall nur die elektrische Maschine, nicht aber das Pumpsystem derart geregelt wird, dass insgesamt das Summenbremsmoment vorgesehen wird. Beispielsweise kann das Ist-Pumpsystembremsmoment, welches vom Pumpsystem vorgesehen wird, konstant gehalten werden oder gemäß einer bevorzugten Betriebsstrategie des Pumpsystems vorgesehen werden, wobei die Differenz, welche zu dem gewünschten Summenbremsmoment fehlt, vollständig von der elektrischen Maschine getragen wird. Beispielsweise kann der Bremsdruck, der das Pumpsystembremsmoment vorsieht, für eine vorbestimmte Zeitdauer konstant gehalten werden und die Anpassung an das Summenbremsmoment wird durch die Regelung der elektrischen Maschine vorgesehen. Ebenso kann das Pumpsystem konstant gehalten werden, wobei die elektrische Maschine die Anpassung an das erwünschte Summenbremsmoment vorsieht, bis das von der elektrischen Maschine vorgesehene Rekuperationsbremsmoment einen Wert außerhalb eines gewünschten Betriebsbereichs der elektrischen Maschine erreicht. Stößt auf diese Weise die elektrische Maschine an die Grenzen einer vorgegebenen Steuerspanne, so kann dies ignoriert werden, bis die Differenz zwischen einem Ist-Summenbremsmoment und einem Soll-Summenbremsmoment eine Schwelle überschreitet, oder das Pumpsystembremsmoment kann erhöht bzw. verringert werden, so dass das Rekuperationsbremsmoment wieder innerhalb eines erlaubten Betriebsbereichs der elektrischen Maschine fällt. Die Differenz zwischen einem Ist-Summenbremsmoment und einem Soll-Summenbremsmoment führt zu einer Bremsung, deren Wirkung geringer als ein entsprechender Sollwert ist. Toleriert der Fahrer oder eine Steuerung die geringere Wirkung, so wird diese beibehalten. Liegt die geringere Wirkung außerhalb seines Toleranzbereichs, so erhöht der Fahrer oder die Steuerung automatisch das Soll-Summenbremsmoment durch stärkere Betätigung der Bremse bzw. durch Erhöhung eines Signalswerts, wodurch das Pumpsystem aufgrund der erhöhten Differenz eingeschaltet wird.

Eine Kompensation durch das Pumpsystem kann auch eine sprunghafte Änderung des Pumpsystembremsmoments umfassen, da das Rekuperationsbremsmoment den sich ergebenden (invertierten) Sprung aufnehmen kann. Das Summenbremsmoment kann dem Bremsmoment entsprechen, der für das ganze Fahrzeug gelten soll. Somit kann das Summenbremsmoment gleich einem Fahrzeug-Soll-Bremsmoment vorgesehen werden, wobei das Fahrzeug-Soll-Bremsmoment das gewünschte Abbremsen des gesamten Fahrzeugs wiedergibt. Ferner kann neben dem Summenbremsmoment ein weiteres Zusatz-Bremsmoment berücksichtigt werden, so dass neben dem Summenbremsmoment, welches durch die elektrische Maschine und das Pumpsystem vorgesehen wird, auch weitere Bremskräfte berücksichtigt werden, die auf das Fahrzeug wirken. Das Summenbremsmoment wird dementsprechend um alle Zusatzbremsmomente verringert, um den Zusatzbremsmomenten Rechnung zu tragen. Derartige Zusatzbremsmomente umfassen insbesondere Bremsmomente, die von einem üblichen Hydraulikbremssystem erzeugt werden, mit dem ein Fahrer durch Betätigung des Bremspedals das Fahrzeug abbremst. Als Hydraulikbremssystem wird hier nur das durch den Fahrer betätigte Bremssystem bezeichnet, im Gegensatz zu dem Pumpsystem, welches von einer automatischen Steuerung des Fahrzeugs betätigt wird. Diese begriffliche Zuordnung bedeutet nicht, dass das Pumpsystem kein hydraulisches Pumpsystem sein kann.

Vielmehr kann das Pumpsystem ebenso hydraulisch arbeiten, wird jedoch im Gegensatz zu dem "Hydraulikbremsmoment" welches mittels Pedal betätigt wird, mit einer Pumpe realisiert. Weitere Zusatzbremsmomente können sein: Ein Bremsmoment, das der negativen Beschleunigung entspricht, welches auf das Fahrzeug wirkt und von der Masse des Fahrzeugs und einem Steigungswinkel einer Fahrbahnoberfläche erzeugt wird. Ein derartiges Zusatzbremsmoment entspricht somit einem Bremsmoment, welches die gleiche Verzögerung (negative Beschleunigung) hervorruft, die von der Steigung der Fahrbahnoberfläche erzeugt wird. Weitere Zusatzbremsmomente, die bei der Erzeugung des Pumpsystembremsmoments und des Rekuperationsbremsmoments berücksichtigt werden, sind Reibungskräfte und Luftwiderstand, sowie Bremsmomente, die von einem mitlaufenden Verbrennungsmotor erzeugt werden, der durch entsprechende Winkelsteuerung oder ähnliche Ansteuerung den Abtrieb abbremst. Zudem gelten als Zusatzbremsmomente diejenigen Drehmomente, die an fahrzeuginterne Komponenten übertragen werden, beispielsweise mechanische Lasten wie Klimaanlage, Lichtmaschine, Servoantrieb, Bremskraftverstärker bzw. Bremskraftunterstützer oder Kompressor. Obwohl diese Lasten nicht unbedingt direkt mit dem Abtrieb verbunden sind, so bremsen diese dennoch das Fahrzeug und somit zumindest indirekt den Abtrieb insgesamt ab, da von ihnen Drehmoment aufgenommen wird.

Vorzugsweise arbeiten elektrische Maschine und Pumpsystem beide als Abbremsmittel, wobei das Pumpsystemdrehmoment kleiner oder gleich dem Summenbremsmoment ist. Dadurch wird erreicht, dass die elektrische Maschine entweder kein Moment aufnimmt oder Drehmoment zur Rekuperation aufnimmt, jedoch nicht als Antrieb arbeitet. Prinzipiell ist jedoch möglich, dass das Pumpsystem ein Pumpsystembremsmoment größer als das Summenbremsmoment vorsieht, so dass die elektrische Maschine angesteuert wird, um Antriebsmoment zu erzeugen und somit die Übersteuerung durch das Pumpsystem zu kompensieren. Da allerdings auf diese Weise das von der elektrischen Maschine erzeugte Antriebsmoment von dem Pumpsystem bzw. von dem Pumpsystembremsmoment aufgenommen wird, bildet dies eine spezielle Ausführung der Erfindung, die nur in Ausnahmen vorgesehen wird, beispielsweise wenn die erforderliche Antriebsleistung der elektrischen Maschine sehr gering ist oder wenn ein spezieller Betriebsmodus des Pumpsystems dies erfordert.

Das Pumpsystem wird vorzugsweise diskret angesteuert, wobei dies mit einer besonders einfachen Ansteuerung des Pumpsystems erreicht werden kann. Dadurch ergeben sich diskrete Bremsmomentwerte für das Pumpsystembremsmoment, die sich um Stufenhöhen unterscheiden. Mit anderen Worten können in diesem Fall nur einzelne bestimmte Pumpsystembremsmomente eingestellt werden, wobei zwischen den diskreten Bremsmomentwerten liegenden Pumpsystembremsmomente nicht erreicht werden können. Damit kann das Pumpsystem keine Pumpsystembremsmomente erzeugen, die zwischen dem kleinsten möglichen diskreten Bremsmoment und Null liegen. Wenn ein Summenbremsmoment erforderlich ist, der kleiner als der kleinstmögliche Pumpsystembremsmoment ist, dann übernimmt erfindungsgemäß die elektrische Maschine das vollständige Summenbremsmoment, so dass in diesem Fall das Rekuperationsbremsmoment gleich dem Summenbremsmoment ist. Das Summenbremsmoment wird somit vollständig von der elektrischen Maschine übernommen, wenn der Minimalbetrieb des Pumpsystems bereits ein zu hohes Pumpsystembremsmoment erzeugen würde.

Nach dem oben stehenden absoluten Regelverhalten, das bei kleinen absoluten Summenbremsmomenten verwendet wird, wird ferner ein Regelverhalten für Relativänderungen vorgesehen. Demnach sieht die Erfindung ferner vor, dass das Pumpsystembremsmoment sich von einem ersten Moment auf einen zweiten Moment ändert, wenn das zulässige Betriebsintervall der elektrischen Maschine bereits ausgereizt ist, wenn noch eine weitere Erhöhung angefordert wird. Beispielsweise kann das erste Moment einem von dem Pumpsystem vorgesehenen Bremsmoment entsprechen, das jedoch hinsichtlich des gesamten Summenbremsmoments zu gering ist, als dass die elektrische Maschine das restliche Bremsmoment aufbringen könnte. Mit anderen Worten ist das erste Moment des Pumpsystems bezogen auf das Summenbremsmoment zu gering, so dass das verbleibende Fehlmoment nicht mehr von der elektrischen Maschine getragen werden kann. In diesem Fall schaltet das Pumpsystembremsmoment auf ein zweites Moment, das über dem ersten Moment liegt, so dass das verbleibende Bremsmoment, welches von der elektrischen Maschine aufgebracht werden muss, innerhalb eines zulässigen Betriebsinterfalls der elektrischen Maschine liegt. Mit der Erhöhung von dem ersten Moment auf das zweite Moment trägt das Pumpsystem nach dem Umschalten einen höheren Anteil, und die elektrische maschine kann den verbleibenden, verringerten Anteil tragen.

Das erfindungsgemäße Verfahren wird vorzugsweise in einem Hybridantrieb eines Fahrzeugs verwendet, der mit einem ESP-System ausgestattet ist, welches das Pumpsystem antreibt. Vorzugsweise ist das vom ESP-System oder von einer anderen Steuereinrichtung des Fahrzeugs angesteuerte Pumpsystem ein Pumpsystem mit einer Kolbenpumpe, die einen Bremsdruck erzeugt, der dem Pumpsystembremsmoment entspricht. Das ESP-System (oder eine andere Pumpensteuerung) steuert das Pumpsystem an und erhält ferner erfindungsgemäß Signale von einem adaptiven Fahrsteuerungssystem oder von einem Fahrgeschwindigkeitsregler (ACC bzw. Tempomat) oder von einer anderen Regeleinrichtung, die eingerichtet ist, aktiv in das Fahrverhalten des Fahrzeugs einzugreifen. Ferner können auch andere Fahrassistenzsysteme das ESP-System ansteuern, um das gewünschte Pumpensystembremsmoment erhalten. Damit das Rekuperationsbremsmoment der elektrischen Maschine auf das gewünschte Summenbremsmoment und das Pumpsystembremsmoment angepasst werden kann, bzw. damit das Pumpsystembremsmoment und das Rekuperationsbremsmoment in geeigneter Kombination vorgesehen werden können, ist das ESP-System oder die oben beschriebenen damit verbundenen Steuerungen, die das ESP-System ansteuern, mit einer Leistungssteuerung der elektrischen Maschine verbunden, beispielsweise mit einer Pulsweiten-Modulationsregelung. Ferner kann eine Zentralsteuerung vorgesehen sein, die sowohl ESP-System als auch die elektrische Maschine direkt oder indirekt ansteuert oder es kann eine Steuerung vorgesehen sein, die das gewünschte Rekuperationsbremsmoment empfängt und in geeignete Steuersignale für die elektrische Maschine bzw. für die Leistungssteuerung der elektrischen Maschine aufbereitet. Die Unterteilung in verschiedene Steuermodule wie sie oben beschrieben wurde ist lediglich beispielhaft, ebenso ist die beschriebene Hierarchiestruktur lediglich beispielhaft. Stattdessen können beliebige Steuerarchitekturen bzw. Regelungsstrukturen verwendet werden, soweit gegeben ist, dass diese zum Ausführen des erfindungsgemäßen Verfahrens geeignet sind.

Um das Rekuperationsbremsmoment bzw. die Steuerung der elektrischen Maschine an die diskrete Betriebsart des Pumpsystems anzupassen, indem nur einzelne diskrete Werte als Pumpsystembremsmoment erlaubt sind, können verschiedene Vergleichsschritte herangezogen werden. Zum Einen kann das Summenbremsmoment mit dem zulässigen diskreten Pumpsystembremsmomenten verglichen werden, wobei sich das Pumpsystembremsmoment ermitteln lässt, das am nächsten am Summenbremsmoment liegt, wobei das Summenbremsmoment größer als das gewählte Pumpsystembremsmoment ist. Dadurch wird das Erfordernis für die elektrische Maschine ermittelt, so dass ein Rekuperationsbremsmoment vorgesehen wird, das der Differenz zwischen dem Summenbremsmoment und dem ausgewählten nächstliegenden Pumpsystembremsmoment liegt. Diese Vorgehensweise entspricht dem Vergleichen des Summenbremsmoments mit einem Raster, das die zulässigen Pumpsystembremsmomente angibt. Je nach Rasterwert wird das Pumpsystembremsmoment gewählt, und der sich ergebende Fehlbetrag wird von der elektrischen Maschine getragen. Diese Vorgehensweise erfordert einen Vergleich von absoluten Bremsmomenten. Zum anderen kann das Rekuperationsbremsmoment auf Grund eines relativen Vergleichs wie folgt vorgesehen werden. Zunächst wird ein momentaner Soll-Bremsmoment erfasst, wobei ein Fehlerwert zwischen dem Soll-Summenbremsmoment und dem momentan vorliegenden Ist-Summenbremsmoment gebildet wird. Mit anderen Worten wird die gewünschte Vorgabe hinsichtlich des Summenbremsmoments mit dem momentan vorliegenden Summenbremsmoment verglichen. Ergibt der Vergleich, dass der Fehlerwert zu groß ist, und die zusätzliche Belastung, die dem Fehlerwert entspricht, von der elektrischen Maschine nicht getragen werden kann, dann wird das Pumpsystembremsmoment erhöht, um den Fehlerwert zu verringern und um somit den Ist-Wert dem Soll-Wert anzunähern. Gleichzeitig wird das Rekuperationsbremsmoment angepasst, so dass sich der Soll-Summenbremsmoment ergibt.

Wenn mit anderen Worten die Summe aus dem Fehlerwert (Ergebnis der Vorgabenänderung und einem Ist-Rekuperationsbremsmoment) außerhalb einer Steuerspanne oder einem zulässigen Betriebsintervall der elektrischen Maschine liegt, wird die Änderung der Anforderung an das Pumpsystem weitergeleitet und derart angesteuert, dass das Pumpsystembremsmoment entsprechend verändert wird, um den Fehlerwert zu verringern. Wenn zu erkennen ist, dass die Regeländerung allein durch Erhöhen bzw. Verringern des Rekuperationsbremsmoments getragen werden kann, so wird das Pumpsystembremsmoment beibehalten und das Rekuperationsbremsmoment nimmt die vollständige Vorgabenänderung auf. Die Vorgabenänderung, d.h. Soll-Summenbremsmoment abzüglich Ist-Summenbremsmoment wird allein durch Erhöhen (bzw. Verringern) des Rekuperationsbremsmoments kompensiert, so dass das Rekuperationsbremsmoment um die Differenz zwischen Soll-Summenbremsmoment und Ist-Summenbremsmoment geändert wird.

Das der Erfindung zu Grunde liegende Konzept wird ferner umgesetzt von einer Steuerungseinrichtung, die einen Eingabeanschluss zur Eingabe eines Summenbremsmoments sowie einen Ausgabeanschluss zur Ausgabe von Steuersignalen umfasst, wobei die Steuersignale das Pumpsystembremsmoment und das Rekuperationsbremsmoment wiedergeben. Daher ist die Ausgabe der Steuervorrichtung vorzugsweise vorgesehen, mit dem Pumpsystem bzw. einer Steuerung des Pumpsystems verbunden zu werden, und ist ferner eingerichtet, mit der elektrischen Maschine bzw. einer Steuerung der elektrischen Maschine verbunden zu sein, um das Rekuperationsbremsmoment vorzusehen. Der Eingabeanschluss zur Eingabe des Summenbremsmoments ist folglich eingerichtet, um entsprechende Summenbremsmomentsignale von einer aktiven Fahrsteuerung zu empfangen, beispielsweise von einer adaptiven Fahrsteuerung (adaptive cruise control, ACC), oder von einem Fahrgeschwindigkeitsregler mit aktivem Bremseingriff. Zur Umsetzung des Verfahrens umfasst die Steuerungsvorrichtung ferner eine Datenverarbeitungseinheit, die mit dem Eingabeanschluss und dem Ausgabeanschluss verbunden ist, und die die entsprechenden Signale umsetzen kann und eingerichtet ist, das erfindungsgemäße Verfahren auszuführen. Der Ausgabeanschluss kann mehrere Anschlüsse umfassen, die jeweiligen Signalen zugeordnet sind. Die Steuerungsvorrichtung kann mittels Software, mittels Hardware oder mittels einer Kombination hiervon umgesetzt werden, wobei die Anschlüsse elektrische Anschlüsse zum Übertragen von elektrischen Signalen oder Funktionsköpfe von Softwaremodulen sein können, die eine Übergabe von Werten erlauben. Falls ein Teil oder die gesamte Steuerungsvorrichtung in Software umgesetzt wird, umfasst die Steuerungsvorrichtung ferner eine CPU oder einen Mikroprozessor, der nur dem erfindungsgemäßen Verfahren zugeordnet sein kann oder der auch andere Steueraufgaben des Fahrzeugs übernimmt. Die Steuerungsvorrichtung kann auch als ein Teil eines ESP-Systems oder als ein Teil einer Fahrsteuerung mit aktivem Bremseingriff umgesetzt werden.

Das zulässige Betriebsintervall der elektrischen Maschine kann vorgegeben sein, kann in einem Speicher hinterlegt sein, oder kann darüber hinaus gemäß dem Ladezustand von Akkumulatoren des Fahrzeugs abhängig sein. Beispielsweise kann bei vollen Akkumulatoren das maximale Rekuperationsbremsmoment gegenüber leeren Akkumulatoren verringert sein. Ferner kann eine Timing-Schaltung vorgesehen werden, die innerhalb eines Intervalls angeforderte Änderungen des Pumpsystembremsmoments hemmt, so dass das Pumpsystembremsmoment nicht geändert wird, selbst wenn dies erforderlich wäre, und somit entweder die Steuerspanne oder das Betriebsintervall der elektrischen Maschine um einen zusätzlichen Bereich erweitert wird, um ein entsprechendes Rekuperationsbremsmoment vorzusehen, oder ein Summenbremsmoment vorgesehen wird, das unter oder über dem angeforderten Summenbremsmoment liegt. Das Betriebsintervall der elektrischen Maschine für den Rekuperationsbetrieb kann definiert werden durch: Null- bis Norm-Betriebsparameter bzw. Maximalbetriebsparameter.

Bei der Ansteuerung der elektrischen Maschine wird vorzugsweise das Übersetzungsverhältnis zwischen Welle der elektrischen Maschine und Abtrieb berücksichtigt, um ein geeignetes Rekuperationsbremsmoment am Abtrieb vorzusehen. Die elektrische Maschine kann direkt mit einer Antriebsachse des Fahrzeugs verbunden sein, oder kann innerhalb eines Getriebes des Fahrzeugs vorgesehen sein, oder kann zwischen Getriebe und Verbrennungsmotor angeordnet sein.

### Kurze Beschreibung der Zeichnungen

Anhand der Zeichnungen ist ein Ausführungsbeispiel der Erfindung dargestellt und in der nachfolgenden Beschreibung näher erläutert.

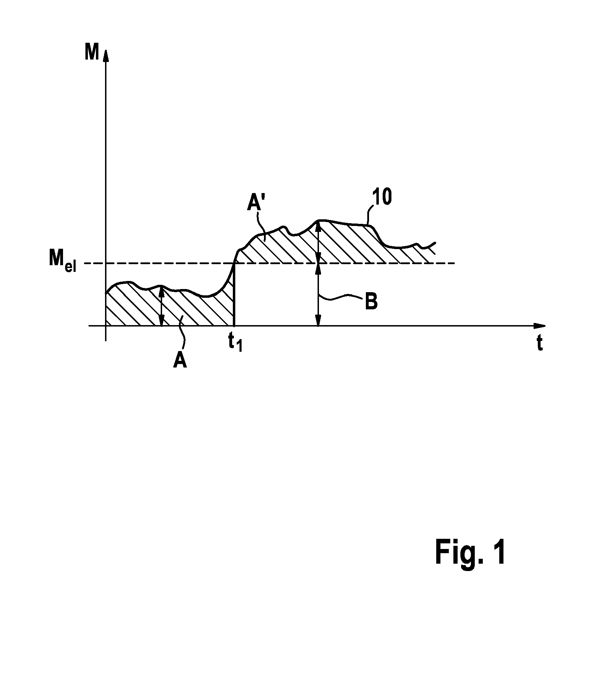

Die Figur 1 zeigt das Regelverhalten eines Pumpsystems und einer elektrischen Maschine gemäß des erfindungsgemäßen Verfahrens.

In der Figur 1 ist der Verlauf des Summenbremsmoments, des Pumpsystembremsmoments und des Rekuperationsbremsmoments dargestellt. Die Kurve 10 zeigt einen beispielhaften Verlauf eines Summenbremsmoments, das von dem Pumpsystembremsmoment und dem Rekuperationsbremsmoment aufgebracht wird. Bis zum Zeitpunkt t1 liegt das Summenbremsmoment unter dem Bremsmoment Mₑ₁, das die maximal von der elektrischen Maschine vorzusehende Bremsleistung angibt. Mit anderen Worten würde beim Überschreiten eines Rekuperationsbremsmoments mit der Größe von Mel der zulässige Betriebsparameterbereich der elektrischen Maschine verlassen werden. Dies ist zum Zeitpunkt t1 der Fall, bei dem das Summenbremsmoment über das maximale Rekuperationsbremsmoment steigt. Daher wird zum Zeitpunkt t1 das Pumpsystem aktiviert, und es wird ein Pumpsystembremsmoment mit der Größe Mₑ₁ erzeugt. Es ist zu beachten, dass vor t1 das Pumpsystembremsmoment gleich Null ist und nach dem Zeitpunkt t1 das Pumpsystembremsmoment konstant bleiben kann. Anstatt des Schwellwerts Mₑ₁, d.h. dem maximal zulässigen Rekuperationsbremsmoments der elektrischen Maschine, kann auch ein Moment als Schwellwert genommen werden, das einem zulässigen Pumpsystembremsmomentwert entspricht, beispielsweise einem diskreten Bremsmomentwert, der von dem Pumpsystem in einer (ersten) von mehreren Betriebsstufen erzeugt wird. Auf diese Weise wäre der Betrieb der elektrischen Maschine an die einzelnen zulässigen diskreten Parameter (d.h. Pumpsystembremsmomente) des Pumpsystems angepasst. Ab dem Zeitpunkt t1 teilt sich das Summenbremsmoment 10 auf in eine Komponente A', die von der elektrischen Maschine als Rekuperationsbremsmoment erzeugt wird (schraffierte Fläche), und eine "Grundlast", die von dem Pumpsystem vorgesehen wird. Mit anderen Worten wird sowohl vor t1 als auch nach t1 das Summenbremsmoment mit dem Rekuperationsbremsmoment feingeregelt, und ein konstantes Pumpsystembremsmoment B wird von dem Pumpsystem vorgesehen. Das Rekuperationsbremsmoment kann somit höhere Bremsmomente vorsehen, als das Rekuperationsbremsmoment, wobei das Pumpsystembremsmoment vorzugsweise eine relativ starke Basis des gesamten Summenbremsmoment bildet. Darüber hinaus wird (in Figur 1 ab t1 dargestellt) von der elektrischen Maschine ein Rekuperationsbremsmoment erzeugt, dass zwar im allgemeinen kleiner als das Pumpsystembremsmoment sein kann, jedoch die Möglichkeit der flexiblen und feinen Regulierung bietet.

In realen Systemen steigt das Pumpsystembremsmoment nicht sprunghaft an, wie es in Figur 1 dargestellt ist, sondern wird über eine Rampe hochgefahren (gemäß der Ansteuerungsträgheit der Pumpe). Das Rekuperationsbremsmoment wird gemäß der entsprechenden Rampe angepasst und entsprechend der Steigung des Pumpsystembremsmoments verringert. Als Rampe werden hier Kurvenverläufe bezeichnet, die vollständig linear sind oder teilweise linear sind und ein Einschwingverhalten aufweisen, das negativ-exponentielle Komponenten und sinusförmige Komponenten enthalten kann.

## Patentansprüche

1. Verfahren zur kombinierten Ansteuerung einer elektrischen Maschine und eines Pumpsystems mit einer zum Erzeugen eines Bremsdrucks vorgesehenen Pumpe, wobei die elektrische Maschine und das Pumpsystem als Bremse für einen Abtrieb eines Fahrzeugs betrieben werden, wobei das Verfahren umfasst:
Vorsehen eines Summenbremsmoments (10), das von der elektrischen Maschine und dem Pumpsystems aufzubringen ist;
Erzeugen eines Pumpsystembremsmoments (B), das auf den Abtrieb wirkt, mittels des Pumpsystems; und
Erzeugen eines Rekuperationsbremsmoments (A, A'), das auf den Abtrieb wirkt, mittels der elektrischen Maschine; wobei das Pumpsystembremsmoment (B) und das Rekuperationsbremsmoment (A, A') gleichzeitig und gemeinsam auf den Abtrieb wirken und das Summenbremsmoment (10) gleich der Summe des Pumpsystembremsmoments (B) und des Rekuperationsbremsmoments (A, A') ist, **dadurch gekennzeichnet, dass** das Pumpsystembremsmoment (B) von einem ersten Moment auf ein sich davon unterscheidendes zweites Moment geändert wird, wenn das Summenbremsmoment (10) abzüglich dem ersten Moment einem Moment entspricht, das außerhalb einer vorgegebenen Steuerspanne oder eines Betriebsintervalls der elektrischen Maschine liegt.

2. Verfahren nach Anspruch 1, wobei das Erzeugen des Pumpsystembremsmoments (B) umfasst: Betreiben der Pumpe und Vorsehen eines Ist-Pumpsystembremsmoments, mit dem das Pumpsystem den Abtrieb beaufschlagt, als Pumpsystembremsmoment (B); und das Erzeugen des Rekuperationsbremsmoments (A, A') umfasst: Ermitteln der Differenz zwischen Summenbremsmoment und Ist-Pumpsystembremsmoment; und Betreiben der elektrischen Maschine als Rekuperationsgenerator, der den Abtrieb mit dem Rekuperationsbremsmoment (A, A') beaufschlagt, das gleich der Differenz ist.

3. Verfahren nach Anspruch 1, wobei das Vorsehen eines Summenbremsmoments (10) umfasst: Ermitteln eines Fahrzeugsollbremsmoments, mit dem das Fahrzeug gemäß einer vorgegebenen negativen Beschleunigung abgebremst werden soll, und Vorsehen des Summenbremsmoments (10) mit einem Wert, der dem Fahrzeugsollbremsmoment entspricht; oder das Vorsehen eines Summenbremsmoments (10) umfasst: Ermitteln eines Fahrzeugsollbremsmoments, mit dem das Fahrzeug gemäß einer vorgegebenen negativen Beschleunigung abgebremst werden soll; Ermitteln mindestens eines weiteren Zusatz-Bremsmoments, das auf den Abtrieb wirkt; und Vorsehen des Summenbremsmoments mit einem Wert, der dem Fahrzeugsollbremsmoment abzüglich aller Zusatz-Bremsmomente grösser als null entspricht, wobei das mindestens eine Zusatz-Bremsmoment mindestens eines der folgenden Bremsmomente umfasst: ein Bremsmoment, das durch ein mittels Bremspedal betätigtes Hydraulikbremssystem erzeugt wird und auf den Abtrieb wirkt; ein Bremsmoment, das der negativen Beschleunigung entspricht, die auf das Fahrzeug wirkt und durch die Masse des Fahrzeugs und einem Steigungswinkel einer Fahrbahnoberfläche erzeugt wird; ein Bremsmoment, das durch einen Luftwiderstand des Fahrzeugs erzeugt wird und auf das Fahrzeug wirkt; ein Bremsmoment, das von einem Verbrennungsmotor erzeugt wird und das auf den Abtrieb wirkt; und ein Bremsmoment, das von mechanisch angetriebenen Fahrzeugkomponenten des Fahrzeugs wie Klimaanlage, Lichtmaschine, Servoantrieb, Bremskraftunterstützung oder Kompressor erzeugt wird, die mit dem Abtrieb indirekt oder direkt gekoppelt sind.

4. Verfahren nach Anspruch 1 oder 2, wobei das Pumpsystembremsmoment (B) kleiner als oder gleich dem Summenbremsmoment (10) ist.

5. Verfahren nach einem der vorangehenden Ansprüche, wobei das Pumpsystem ein Pumpsystembremsmoment (B) in diskreten, sich um Stufenhöhen unterscheidende diskrete Bremsmomentwerte vorsieht und das Rekuperationsbremsmoments (A, A') dem Summenbremsmoment (10) entspricht, wenn das Summenbremsmoment (10) kleiner als der kleinste diskrete Bremsmomentwert des Pumpsystembremsmoments (B) ist.

6. Verfahren nach einem der vorangehenden Ansprüche, wobei das Pumpsystem eine Kolbenpumpe umfasst, die das Pumpsystembremsmoments erzeugt.

7. Verfahren nach einem der vorangehenden Ansprüche, wobei das Erzeugen des Pumpsystembremsmoments umfasst: Empfangen eines ESP-Steuersignals von einem elek-tronischen Stabilitätprogramm, ESP, des Fahrzeugs und Betreiben der Pumpe gemäß dem ESP-Steuersignal; und das Vorsehen eines Summenbremsmoments (10) umfasst: Empfangen eines ACC-Steuersignals von einer adaptiven Fahrsteuerung, ACC, und Betreiben der Pumpe sowie der elektrischen Maschine zur gemeinsamen Erzeugung des Summenbremsmoments (10), wobei das Rekuperationsbremsmoment (A, A') der elektrischen Maschine in einer Steuerungsspanne vorgesehen wird, die größer als die größte Stufe des in diskreten Werten vorgesehenen Pumpsystembremsmoments (B) ist.

8. Verfahren nach einem der vorangehenden Ansprüche, das ferner umfasst: Vergleichen des Summenbremsmoments (10) mit diskreten Pumpsystembremsmomenten, die von dem Pumpsystem vorgesehen werden können, und Erfassen desjenigen Pumpsystembremsmoments, das am nächsten zu dem Summenbremsmoment (10) liegt und nicht größer als das Summenbremsmoment (10) ist, wobei das Erzeugen des Rekuperationsbremsmoments (A, A') umfasst: Erzeugen des Rekuperationsbremsmoments (A, A'), das der Differenz zwischen dem Summenbremsmoment (10) und dem Pumpsystembremsmoments (B), das am nächsten zu dem Summenbremsmoment (10) liegt, entspricht, oder das ferner umfasst: Erfassen eines momentanen Soll-Summenbremsmoments, Bilden eines Fehlerwerts als Differenz zwischen dem momentanen Soll-Summenbremsmoments und einem Ist-Summenbremsmoment, das momentan von der elektrischen Maschine und dem Pumpsystem gemeinsam erzeugt wird, und, wenn die Summe aus dem Fehlerwert und einem Ist-Rekuperationsbremsmoment, das von der elektrischen Maschine momentan vorgesehen wird, außerhalb einer Steuerspanne oder einem Betriebsintervall der elektrischen Maschine liegt, Verändern des Pumpsystembremsmoments (B) zur Verringerung des Fehlerwerts; und andernfalls: Beibehalten des Pumpsystembremsmoments (B) und Verändern des Rekuperationsbremsmoments (A, A') zur Verringerung des Fehlerwerts.

9. Steuerungsvorrichtung zur kombinierten Ansteuerung einer elektrischen Maschine und eines Pumpsystems mit einer zum Erzeugen eines Bremsdrucks vorgesehenen Pumpe, umfassend: einen Eingabeanschluss zur Eingabe eines Summenbremsmoments, das von der elektrischen Maschine und dem Pumpsystems aufzubringen ist; mindestens einen Ausgabeanschluss zur Ausgabe von Steuersignalen, die ein Pumpsystembremsmoment (B) und ein Rekuperationsbremsmoment (A, A') wiedergeben, sowie eine Datenverarbeitungseinheit, die mit dem Eingabeanschluss und dem mindestens einen Ausgabeanschluss verbunden ist, und zusammen mit den Eingabe- und Ausgabenschlüssen das Verfahren nach einem der vorangehenden Ansprüchen ausführt.

## Claims

1. Method for the combined actuation of an electric machine and a pump system having a pump which is provided for generating a brake pressure, wherein the electric machine and the pump system are operated as a brake for a power takeoff of a vehicle, wherein the method comprises:
providing a sum braking torque (10) which is to be applied by the electric machine and the pump system;
generating a pump system braking torque (B) which acts on the power takeoff, by means of the pump system; and
generating a recuperation braking torque (A, A') which acts on the power takeoff, by means of the electric machine; wherein the pump system braking torque (B) and the recuperation braking torque (A, A') act simultaneously and jointly on the power takeoff, and the sum braking torque (10) is equal to the sum of the pump system braking torque (B) and of the recuperation braking torque (A, A'), **characterized in that**
the pump system braking torque (B) is changed from a first torque to a second torque which differs therefrom if the sum braking torque (10) minus the first torque corresponds to a torque which is outside a predefined control range or an operating interval of the electric machine.

2. Method according to Claim 1, wherein generating the pump system braking torque (B) comprises: operating the pump and providing an actual pump system braking torque with which the pump system acts on the power takeoff, as a pump system braking torque (B); and generating the recuperation braking torque (A, A') comprises: determining the difference between the sum braking torque and the actual pump system braking torque; and operating the electric machine as a recuperation generator which applies the recuperation braking torque (A, A') to the power takeoff, said recuperation braking torque (A, A') being equal to the difference.

3. Method according to Claim 1, wherein providing a sum braking torque (10) comprises: determining a vehicle setpoint braking torque with which the vehicle is to be braked according to a predefined negative acceleration, and providing the sum braking torque (10) with a value which corresponds to the vehicle setpoint braking torque; or providing a sum braking torque (10) comprises: determining a vehicle setpoint braking torque with which the vehicle is to be braked according to a predefined negative acceleration; determining at least one further additional braking torque which acts on the power takeoff; and providing the sum braking torque with a value which corresponds to the vehicle setpoint braking torque minus all the additional braking torques which are greater than zero, wherein the at least one additional braking torque comprises at least one of the following braking torques: a braking torque which is generated by a hydraulic brake system which is activated by means of a brake pedal, and which braking torque acts on the power takeoff; a braking torque which corresponds to the negative acceleration which acts on the vehicle and is generated by the mass of the vehicle and an angle of inclination of a carriageway surface; a braking torque which is generated by an air resistance of the vehicle and acts on the vehicle; a braking torque which is generated by an internal combustion engine and which acts on the power takeoff; and a braking torque which is generated by mechanically driven vehicle components of the vehicle such as the air-conditioning system, dynamo, servo-drive, brake boosting means or compressor which are coupled indirectly or directly to the power takeoff.

4. Method according to Claim 1 or 2, wherein the pump system braking torque (B) is lower than or equal to the sum braking torque (10).

5. Method according to one of the preceding claims, wherein the pump system provides a pump system braking torque (B) in discrete braking torque values which differ by increments, and the recuperation braking torque (A, A') corresponds to the sum braking torque (10) if the sum braking torque (10) is lower than the lowest discrete braking torque value of the pump system braking torque (B).

6. Method according to one of the preceding claims, wherein the pump system comprises a piston pump which generates the pump system braking torque.

7. Method according to one of the preceding claims, wherein generating the pump system braking torque comprises: receiving an ESP control signal from an electronic stability programme, ESP, of the vehicle and operating the pump according to the ESP control signal; and providing a sum braking torque (10) comprises: receiving an ACC control signal from an adaptive driving controller, ACC, and operating the pump and the electric machine to jointly generate the sum braking torque (10), wherein the recuperation braking torque (A, A') of the electric machine is provided in a control range which is larger than the largest increment of the pump system braking torque (B) provided in discrete values.

8. Method according to one of the preceding claims which also comprises: comparing the sum braking torque (10) with discrete pump system braking torques which can be provided by the pump system, and detecting that pump system braking torque which is closest to the sum braking torque (10) and not larger than the sum braking torque (10), wherein generating the recuperation braking torque (A, A') comprises: generating the recuperation braking torque (A, A') which corresponds to the difference between the sum braking torque (10) and the pump system braking torque (B) which is closest to the sum braking torque (10), or which further comprises: detecting an instantaneous setpoint sum braking torque, forming a fault value as a difference between the instantaneous setpoint sum braking torque and an actual sum braking torque which is generated instantaneously and jointly by the electric machine and the pump system, and, if the sum of the fault value and an actual recuperation braking torque which is provided instantaneously by the electric machine is outside a control range or an operating interval of the electric machine, changing the pump system braking torque (B) in order to reduce the fault value; and otherwise: retaining the pump system braking torque (B) and changing the recuperation braking torque (A, A') in order to reduce the fault value.

9. Control device for the combined actuation of an electric machine and a pump system having a pump which is provided for generating a brake pressure, comprising: an input connection for inputting a sum braking torque which is to be applied by the electric machine and the pump system; at least one output connection for outputting control signals which represent a pump system braking torque (B) and a recuperation braking torque (A, A'), and a data processing unit which is connected to the input connection and the at least one output connection, and, together with the input and output connections, carries out the method according to one of the preceding claims.

## Revendications

1. Procédé de commande combinée d'une machine électrique et d'un système de pompe comprenant une pompe prévue pour générer une pression de freinage, la machine électrique et le système de pompe fonctionnant en tant que frein pour une prise de force d'un véhicule, le procédé comprenant :
prévoir un couple de freinage total (10) qui doit être appliqué par la machine électrique et le système de pompe ;
générer un couple de freinage de système de pompe (B), lequel agit sur la prise de force, au moyen du système de pompe ; et
générer un couple de freinage de récupération (A, A'), qui agit sur la prise de force, au moyen de la machine électrique ; le couple de freinage de système de pompe (B) et le couple de freinage de récupération (A, A') agissant simultanément et conjointement sur la prise de force et le couple de freinage total (10) étant égal à la somme du couple de freinage de système de pompe (B) et du couple de freinage de récupération (A, A'),
**caractérisé en ce que**
le couple de freinage de système de pompe (B) est modifié d'un premier couple à un deuxième couple différent de celui-ci, lorsque le couple de freinage total (10) moins le premier couple correspond à un couple qui se situe en dehors d'un intervalle de commande prédéfini ou d'un intervalle de fonctionnement de la machine électrique.

2. Procédé selon la revendication 1, dans lequel la génération du couple de freinage de système de pompe (B) comprend : faire fonctionner la pompe et prévoir un couple de freinage de système de pompe réel, avec lequel le système de pompe sollicite la prise de force, en tant que couple de freinage de système de pompe (B) ; et la génération du couple de freinage de récupération (A, A') comprend :
déterminer la différence entre le couple de freinage total et le couple de freinage de système de pompe réel ; et faire fonctionner la machine électrique en tant que générateur de récupération, qui sollicite la prise de force avec le couple de freinage de récupération (A, A') qui est égal à la différence.

3. Procédé selon la revendication 1, dans lequel le fait de prévoir un couple de freinage total (10) comprend : déterminer un couple de freinage de consigne du véhicule, avec lequel le véhicule doit être freiné en fonction d'une accélération négative prédéfinie, et affecter le couple de freinage total (10) d'une valeur qui correspond au couple de freinage de consigne du véhicule ; ou le fait de prévoir un couple de freinage total (10) comprend : déterminer un couple de freinage de consigne du véhicule avec lequel le véhicule doit être freiné en fonction d'une accélération négative prédéfinie ; déterminer au moins un autre couple de freinage supplémentaire qui agit sur la prise de force ; et affecter le couple de freinage total d'une valeur qui correspond au couple de freinage de consigne du véhicule moins tous les couples de freinage supplémentaires supérieurs à zéro, l'au moins un couple de freinage supplémentaire comprenant au moins l'un des couples de freinage suivants : un couple de freinage qui est produit par un système de frein hydraulique actionné par la pédale de frein et qui agit sur la prise de force ; un couple de freinage qui correspond à l'accélération négative qui agit sur le véhicule et qui est produite par la masse du véhicule et par un angle de pente d'une surface de la chaussée ; un couple de freinage qui est produit par une résistance à l'air du véhicule et qui agit sur le véhicule ; un couple de freinage qui est produit par un moteur à combustion interne et qui agit sur la prise de force ; et un couple de freinage qui est produit par des composants entraînés mécaniquement du véhicule tels que l'installation de climatisation, l'alternateur, la servocommande, le servofrein ou le compresseur, qui sont accouplés à la prise de force directement ou indirectement.

4. Procédé selon la revendication 1 ou 2, dans lequel le couple de freinage de système de pompe (B) est inférieur ou égal au couple de freinage total (10).

5. Procédé selon l'une quelconque des revendications précédentes, dans lequel le système de pompe prévoit un couple de freinage de système de pompe (B) dans des valeurs de couple de freinage discrètes se distinguant par des niveaux d'étages et le couple de freinage de récupération (A, A') correspond au couple de freinage total (10) lorsque le couple de freinage total (10) est inférieur à la plus petite valeur de couple de freinage discrète du couple de freinage de système de pompe (B).

6. Procédé selon l'une quelconque des revendications précédentes, dans lequel le système de pompe comprend une pompe à piston qui produit le couple de freinage de système de pompe.

7. Procédé selon l'une quelconque des revendications précédentes, dans lequel la génération du couple de freinage de système de pompe comprend :
recevoir un signal de commande ESP d'un programme de stabilité électronique, ESP, du véhicule et faire fonctionner la pompe en fonction du signal de commande ESP ; et le fait de prévoir un couple de freinage total (10) comprend : recevoir un signal de commande ACC d'une commande de conduite adaptative, ACC, et faire fonctionner la pompe ainsi que la machine électrique pour produire conjointement le couple de freinage total (10), le couple de freinage de récupération (A, A') de la machine électrique étant prévu dans un intervalle de commande qui est supérieur au plus grand étage du couple de freinage de système de pompe (B) prévu dans des valeurs discrètes.

8. Procédé selon l'une quelconque des revendications précédentes, comprenant en outre : comparer le couple de freinage total (10) à des couples de freinage de système de pompe discrets qui peuvent être prévus par le système de pompe, et détecter le couple de freinage de système de pompe qui est le plus proche du couple de freinage total (10) et qui n'est pas supérieur au couple de freinage total (10), la production du couple de freinage de récupération (A, A') comprenant : produire le couple de freinage de récupération (A, A') qui correspond à la différence entre le couple de freinage total (10) et le couple de freinage de système de pompe (B) qui est le plus proche du couple de freinage total (10) ou qui comprend en outre : détecter un couple de freinage total de consigne momentané, former une valeur d'erreur en tant que différence entre le couple de freinage total de consigne momentané et un couple de freinage total réel, qui est produit momentanément conjointement par la machine électrique et le système de pompe, et si la somme de la valeur d'erreur et d'un couple de freinage de récupération réel, qui est prévu de manière momentanée par la machine électrique, est située à l'extérieur d'un intervalle de commande ou d'un intervalle de fonctionnement de la machine électrique, modifier le couple de freinage de système de pompe (B) pour réduire la valeur d'erreur ; et autrement : conserver le couple de freinage de système de pompe (B) et modifier le couple de freinage de récupération (A, A') pour réduire la valeur d'erreur.

9. Dispositif de commande pour la commande combinée d'une machine électrique et d'un système de pompe comprenant une pompe prévue pour générer une pression de freinage, comprenant : un raccord d'entrée pour l'entrée d'un couple de freinage total qui doit être appliqué par la machine électrique et le système de pompe ; au moins un raccord de sortie pour émettre des signaux de commande qui reproduisent un couple de freinage de système de pompe (B) et un couple de freinage de récupération (A, A'), ainsi qu'une unité de traitement de données qui est connectée au raccord d'entrée et à l'au moins un raccord de sortie, et qui met en oeuvre, conjointement avec les raccords d'entrée et de sortie, le procédé selon l'une quelconque des revendications précédentes.
